# EUROPEAN PATENT APPLICATION

(11) **EP 4 317 983 A1**
(43) Date of publication of application: **07.02.2024**
(21) Application number: 22774800.1
(22) Date of filing: 17.02.2022
(51) Int. Cl.: G01N 35/00

(54) **AUTOMATIC ANALYSIS DEVICE**

(30) Priority: 22.03.2021 JP 2021047010
(71) Applicant: HITACHI HIGH-TECH CORPORATION, Tokyo 105-6409 (JP)
(72) Inventor: OGURO, Yasuhisa, Tokyo 105-6409 (JP); TAKAYAMA, Hiroyuki, Tokyo 105-6409 (JP); NONAKA, Kouhei, Tokyo 105-6409 (JP)
(74) Representative: Strehl Schübel-Hopf & Partner
(86) International application number: PCT/JP2022/006435
(87) International publication number: WO 2022/202000

(57) **Abstract**

To provide an automatic analyzer without necessity of manual air vent in a pump.

An automatic analyzer comprises a water supply tank 53, a supply path 70 connected to each mechanism of an automatic analyzer 100 from the water supply tank 53, a water supply pump 54 which supplies water to each mechanism from the water supply tank 53 through the supply path 70, a detector 61 which detects abnormality in the supply path 70, a waste liquid path 63 branched from the supply path 70 in a branch pipe 60 provided in the supply path 70, a relief valve 62 provided in the waste liquid path 63, and a control unit 64 which controls the operation of each mechanism in the automatic analyzer 100, in which the control unit 64 opens the relief valve 62 while driving the water supply pump 54, based on the abnormality in the supply path 70 detected by the detector 61.

## Description

### Technical Field

The present invention relates to an automatic analyzer.

### Background Art

As an example of a device internal pipe suitable for supplying purified water to a cleaning tank of an automatic analyzer or to a water supply mechanism through a nozzle, PTL 1 describes a structure in which a self-operated pressure reducing control valve is disposed between an electrically operated pressurizing pump and a branch pipe, a direct acting solenoid valve and a fixed resistance pipe having a specific hole diameter and length are provided in a pipe before the branch pipe, and water is instantaneously supplied by opening and closing the solenoid valve.

### Citation List

### Patent Literature

PTL 1: JPH10-10137A

### Summary of Invention

### Technical Problem

The automatic analyzer refers to a device that causes a biological sample such as blood to react with an analytical reagent that is specifically reactive with a component to be measured in the sample and detects a complex produced by this reaction using a spectroscopic method such as electrochemiluminescence. The automatic analyzer automatically performs all the operations from the detection of the component to be measured to an operation of outputting the result.

In the structure, the purified water used in the automatic analyzer is produced by a purified water manufacturing device separated from a main body, is temporarily stored in a water storage tank in the automatic analyzer, and is supplied to everywhere using an electrically operated pump.

The purified water is used in various fields, for example, as a liquid for cleaning contamination in a dispensing probe, a stirring rod, or a photometric reaction container, for measurement of a reference sample of photometry data, that is, blank value measurement, or as a filling liquid of a pipe to a dispensing syringe and a dispensing probe.

Accordingly, the purified water is supplied in amounts of distributed water suitable for various uses through pipes branched from one water storage tank in various directions.

In the structure disclosed in PTL 1, the purified water used in the automatic analyzer is produced by a purified water manufacturing device separated from a main body, is temporarily stored in a water storage tank as a buffer in the automatic analyzer, and is supplied to everywhere using an electrically operated pump.

Here, when the pump operates in a state where air is present in the pump, the pump runs idle, which causes malfunction. Therefore, in a product in the related art, when air is present in the pump, for example, at the time of installation, a maintenance worker manually performs air bleeding, for example, removes a sealing plug of an air bleeding flow path. However, time and effort are required for the maintenance work of the maintenance worker, and thus there is a room for improvement.

In addition, when air is incorporated into a water supply pump during the operation of the device such that cavitation occurs, a decrease in supply water pressure causes a decrease in analysis performance. Therefore, an operator needs to manually perform air bleeding work, and thus there is also a room for improvement.

In order to solve the above-described problems, an object of the present invention is to provide an automatic analyzer that does not need to manually perform air bleeding of a pump.

### Solution to Problem

The present invention includes a plurality of means for solving the above-described object. For example, an automatic analyzer includes: a water supply tank; a supply flow path connected to each of mechanisms of the automatic analyzer from the water supply tank; a pump configured to supply water to each of the mechanisms from the water supply tank through the supply flow path; a detector configured to detect abnormality in the supply flow path; a waste liquid flow path branched from the supply flow path in a branch portion provided in the supply flow path; a relief valve provided in the waste liquid flow path; and a control unit configured to control an operation of each mechanism in the automatic analyzer, in which the control unit opens the relief valve while driving the pump, based on the abnormality in the supply flow path detected by the detector.

### Advantageous Effects of Invention

According to the present invention, air bleeding of a pump does not need to be manually performed. Objects, configurations, and effects other than those described above will be clarified by describing the following embodiment.

### Brief Description of Drawings

Fig. 1 is a schematic view of the whole structure of an automatic analyzing system according to one embodiment of the invention.
Fig. 2 is a schematic view of pump structure and air bite.
Fig. 3 is a structural view of a water supply unit of the automatic analyzing system according to the embodiment.
Fig. 4 is a flow chart of air vent according to the embodiment.
Fig. 5 is a flow chart of automatic pressure adjustment according to the embodiment.

### Description of Embodiments

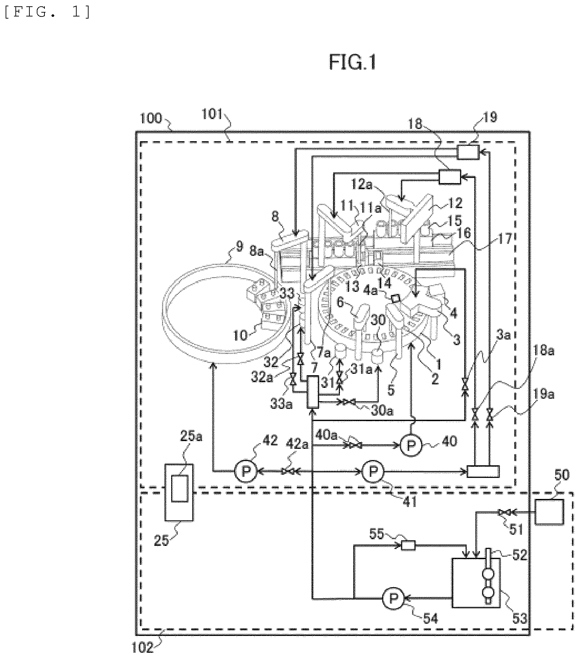

An embodiment of an automatic analyzer according to the present invention will be described using Figs. 1 to 5. In the drawings used in the present specification, the same or corresponding components are represented by the same or similar reference numerals, and the description of these components will not be repeated.

First, an example of an overall configuration of the automatic analyzer will be described using Fig. 1. Fig. 1 is a diagram schematically illustrating an overall configuration of an automatic analyzer 100 according to the present invention.

The automatic analyzer 100 illustrated in Fig. 1 is mainly classified into three regions including: an analysis unit 101 that is a configuration for mixing a sample such as blood and a reagent with each other to cause a reaction and measuring an absorbance of the reaction liquid; a part of a water supply unit 102 that is a mechanism for supplying pure water to each of mechanisms of the analysis unit 101; and a controller 25.

The analysis unit 101 is a mechanism that dispenses samples and reagents into a plurality of reaction containers 2, respectively, causes the sample and the reagent to react with each other, and measures the reaction liquid, and includes a reaction disk 1, a reagent disk 9, a sample transport mechanism 17, reagent dispensing mechanisms 7 and 8, a reagent syringe 19, sample dispensing mechanisms 11 and 12, a sample syringe 18, a cleaning mechanism 3, a light source 4a, a spectrophotometer 4, stirring mechanisms 5 and 6, a cleaning pump, and cleaning tanks 13, 14, 30, 31, 32, and 33.

In the reaction disk 1, the plurality of reaction containers 2 for mixing a sample and a reagent with each other to cause a reaction are arranged on a circumference. In the vicinity of the reaction disk 1 (reaction bath), the sample transport mechanism 17 that moves a sample rack 16 on which a sample container 15 containing a sample such as blood is loaded is provided.

The sample dispensing mechanisms 11 and 12 capable of rotation and vertical movement are provided between the reaction disk 1 and the sample transport mechanism 17, and include sample probes 11a and 12a, respectively. The sample syringe 18 is connected to the sample probes 11a and 12a. Each of the sample probes 11a and 12a moves along an arc around a rotating shaft, and dispenses the sample into the reaction container 2 from the sample container 15 transported to a sample dispensing position by the sample transport mechanism 17.

In an operating range of the sample dispensing mechanism 11, the cleaning tank 13 where the sample probe 11a is cleaned with cleaning water and a cleaning container (not illustrated for convenience of illustration) cleaned with special cleaning water are disposed. In an operating range of the sample dispensing mechanism 12, the cleaning tank 14 where the sample probe 12a is cleaned with cleaning water and a cleaning container (not illustrated) cleaned with special cleaning water are disposed.

The reagent disk 9 has a structure in which a plurality of reagent bottles 10 can be loaded on a circumference. The reagent disk 9 is kept cool and is covered with a cover provided at an aspiration port (not illustrated). The reagent bottle 10 is a bottle containing the reagent used for analyzing the sample.

The reagent dispensing mechanisms 7 and 8 capable of rotation and vertical movement are provided between the reaction disk 1 and the reagent disk 9, and include reagent probes 7a and 8a, respectively. The reagent syringe 19 is connected to the reagent probes 7a and 8a. Each of the reagent probes 7a and 8a moves along an arc around a rotating shaft, accesses the reagent disk 9 from the aspiration port, and dispenses the reagent from the reagent bottle 10 into the reaction container 2.

In an operating range of the reagent dispensing mechanism 7, the cleaning tank 32 where the reagent probe 7a is cleaned with cleaning water is disposed. In an operating range of the reagent dispensing mechanism 8, the cleaning tank 33 where the reagent probe 8a is cleaned with cleaning water is disposed.

In the vicinity of the reaction disk 1, the stirring mechanisms 5 and 6 that stir the mixed liquid (reaction liquid) of the sample and the reagent dispensed into the reaction container 2, the spectrophotometer 4 that measures the absorbance of the reaction liquid by measuring transmitted light obtained by light transmitting through the reaction liquid in the reaction container 2 from the light source 4a, the cleaning mechanism 3 that cleans the used reaction container 2, and the like are disposed.

The stirring mechanisms 5 and 6 are configured to be capable of rotation operation and vertical operation with respect to the horizontal direction, and are inserted into the reaction container 2 to stir the mixed liquid (reaction liquid) of the sample and the reagent. In an operating range of the stirring mechanisms 5 and 6, the cleaning tanks 30 and 31 where the stirring mechanisms 5 and 6 are cleaned with cleaning water are disposed. In addition, the cleaning mechanism 3 is connected to the cleaning pump.

The controller 25 is connected to the above-described devices in the automatic analyzer 100, and controls an operation of each of the devices and mechanisms in the automatic analyzer 100. This controller 25 is a computer including a CPU or a memory, and performs arithmetic processing of acquiring the concentration of a predetermined component in the specimen based on the detection result of the spectrophotometer 4.

The control of the operations of the devices by the controller 25 is performed based on various programs stored in a storage device. The storage device stores not only the various programs used for the measurement of the specimen but also various parameters input through an input apparatus, information of a specimen to be measured (for example, specimen type information), the measurement result, and the like.

The control processes of the operations performed by the controller 25 may be collectively performed by one program or may be performed individually by a plurality of programs, or a combination thereof may be adopted. In addition, some or all of the programs may be implemented by dedicated hardware or may be modularized.

A display unit 25a is a display device such as a liquid crystal display that displays, to an operator, various information in the automatic analyzer 100, for example, an input screen of various parameters or settings, analysis inspection data for an initial inspection or a re-inspection, a measurement result, or reagent information. The display unit 25a can be a touch panel type that also functions as an input unit.

The water supply unit 102 has a function of supplying pure water to the analysis unit 101 and includes a pure water facility 50, a water supply solenoid valve 51, a water level sensor 52, a water supply tank 53, a water supply pump 54, and a fixed throttle 55.

The pure water facility 50 is a facility that supplies pure water from the outside of the automatic analyzer 100 to the water supply tank 53 in the automatic analyzer 100, and is a facility of an institution such as a hospital or an inspection center provided with the automatic analyzer 100.

The supply of pure water to the water supply tank 53 is not always performed, and in order to supply pure water to the water supply tank as necessary, the water supply solenoid valve 51 is provided in a pipe from the pure water facility 50 to the water supply tank 53.

In the water supply tank 53, the water level sensor 52 is provided to prevent pure water stored in the water supply tank 53 from overflowing or exhausting. The water supply solenoid valve 51 is controlled to be opened and closed based on water level information from the water level sensor 52.

The water supply pump 54 supplies pure water to each of mechanisms of the analysis unit 101 from the water supply tank 53, and when pure water is not consumed in the analysis unit 101, the water supply pump 54 circulates pure water to the water supply tank 53 from a second flow path including the fixed throttle 55.

The configuration of the automatic analyzer 100 is as described above.

The configuration of the automatic analyzer 100 is not limited to the biochemical analyzer illustrated in Fig. 1 that analyzes an analysis item of biochemistry, and can be used as an analysis device that analyzes another analysis item, for example, an immunological analyzer that analyzes an analysis item of immunity. In addition, the biochemical analyzer is not limited to the configuration illustrated in Fig. 1, and an analysis device that measures another analysis item such as an electrolyte can be separately mounted thereon.

In addition, the automatic analyzer 100 is not limited to single analysis module configuration illustrated in Fig. 1, and a configuration in which two or more modules including analysis modules that can measure the same or different analysis items or pre-treatment modules that perform a pre-treatment are connected using a transport device can be adopted.

The analysis process of the automatic analyzer 100 on the inspection sample is generally performed in the following order.

First, the sample in the sample container 15 loaded on the sample rack 16 that is transported to the vicinity of the reaction disk 1 by the sample transport mechanism 17 is dispensed into the reaction container 2 on the reaction disk 1 by the sample probes 11a and 12a of the sample dispensing mechanisms 11 and 12. Next, the reagent used for the analysis is dispensed by the reagent dispensing mechanisms 7 and 8 from the reagent bottles 10 on the reagent disk 9 into the reaction containers 2 into which the sample is previously dispensed. Next, the mixed liquid of the sample and the reagent in the reaction container 2 is stirred by the stirring mechanisms 5 and 6.

Next, light emitted from the light source 4a is caused to transmit through the reaction container 2 containing the stirred mixed liquid such that the light intensity of the transmitted light is measured by the spectrophotometer 4. The light intensity measured by the spectrophotometer 4 is transmitted to the controller 25 through an A/D converter and an interface. By performing an operation with the controller 25 to acquire the concentration of a predetermined component in a liquid sample such as blood or urine, the result is displayed by the display unit 25a or the like and is stored in a storage unit (not illustrated).

Next, portions where pure water is consumed in the automatic analyzer 100 will be described. Main portions where pure water is used in the device are circulating water for keeping the reaction disk 1 warm, circulating water for keeping the reagent disk 9 cool, and cleaning water of the reagent probes 7a and 8a or the sample probes 11a and 12a.

In the reaction disk 1, in order to cause the sample and the reagent to react with each other at a constant temperature, pure water that is kept at a constant temperature (for example, 37 degrees) is circulated by a circulating pump 40. The reaction container 2 is kept at the constant temperature using this pure water, and the sample and the reagent are caused to react with each other under a constant condition.

As described above, the reaction container 2 is kept at the temperature using the pure water. Therefore, the light emitted from the light source 4a transmits through not only the reaction container 2 but also pure water flowing through the reaction bath. Here, when air bubbles are present in a straight line connecting the light source 4a and the spectrophotometer 4, the light emitted from the light source 4a is scattered by the air bubbles, and there is a possibility that the analysis result is not normally determined. Therefore, in general, a deaerator (not illustrated) is provided in a flow path that circulates the reaction bath to prevent the formation of air bubbles in the reaction bath.

In the reagent disk 9, pure water that is cooled by a cooling device to prevent deterioration of the reagent is circulated by a circulating pump 42 such that the inside of the reagent disk 9 is kept at a low temperature.

The reagent probes 7a and 8a used for aspirating and dispensing the reagent or the sample probes 11a and 12a used for aspirating and dispensing the sample are not disposable, and the same probes are continuously used.

Here, when the reagent or the sample discharged in the previous operation remains in the probe, contamination where the previous reagent or sample is mixed with the reagent or the sample to be aspirated in the next operation occurs, and there is a possibility that the analysis result is not normally determined.

Therefore, in order to use the same probes, in general, the outer surfaces of the reagent probes 7a and 8a are cleaned in the cleaning tanks 32 and 33 and the outer surfaces of the sample probes 11a and 12a are cleaned in the cleaning tanks 13 and 14 by discharging cleaning water to the probe outer surfaces.

In addition, the probe inner surfaces are cleaned by discharging cleaning water from the probes using a pump at a high pressure in the cleaning tanks 13, 14, 31, and 32. In order to discharge the cleaning water at a high pressure, a gear pump 41 is used in many cases.

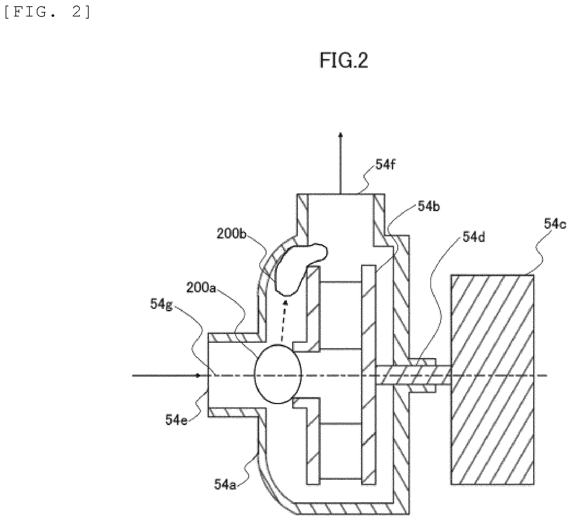

As described above, pure water is used in various mechanisms of the analysis unit 101. The supply of pure water to each of mechanisms is performed by the water supply pump 54. The performance of the water supply pump 54 may decrease due to malfunction, degradation, or incorporation of air bubbles, and the analysis performance may decrease as described above. The decrease in the performance of the pump caused by the incorporation of air bubbles into the water supply pump 54 will be described using Fig. 2. Fig. 2 is a cross-sectional view illustrating the water supply pump that is widely used in the automatic analyzer.

In general, the water supply pump 54 includes a pump case 54a, an impeller 54b, and a motor 54c. In order to transmit a driving force of the motor 54c to the impeller 54b, the motor 54c and the impeller 54b are connected through a shaft 54d.

Along with the driving of the motor 54c, the impeller 54b rotates, liquid is aspirated from an aspiration port 54e, and liquid is discharged from a discharge port 54f.

When the water supply pump 54 operates in a state where air bubbles are incorporated into the water supply pump 54, the pressure in the vicinity of a rotating shaft 54g of the impeller 54b in the water supply pump 54 is negative, and air having a small mass remains as air bubbles 200a in the vicinity of the rotating shaft 54g. As a result, the liquid supply performance of the water supply pump 54 decreases, which leads to, for example, a decrease in supply water pressure, a decrease in discharge flow rate, and an increase in noise.

In a bearing unit of the water supply pump 54, water flows for cooling to prevent the generation of friction heat by friction between the pump case 54a of the water supply pump 54 and the shaft 54d of the motor 54c. However, the amount of air bubbles present in the water supply pump 54 increases such that the water supply pump 54 runs idle, the cooling of the shaft 54d of the motor 54c is insufficient, and friction heat is generated in the water supply pump 54, which causes malfunction of the water supply pump 54 itself.

As one current technique of abnormality detection of a flow path, a technique of monitoring a discharge pressure of the gear pump 41 is known. With the technique of monitoring the discharge pressure of the gear pump 41, the cause for malfunction of a flow path downstream of the gear pump 41 can be discriminated. However, the pressure value of the flow path downstream of the gear pump 41 is the sum of the supply water pressure value of the water supply pump 54 and the supply water pressure value of the gear pump 41. Therefore, the discrimination of the cause for abnormality of a flow path upstream of the gear pump 41 is insufficient. In addition, when air bubbles are present in the water supply pump 54, a maintenance worker needs to manually perform air bleeding work.

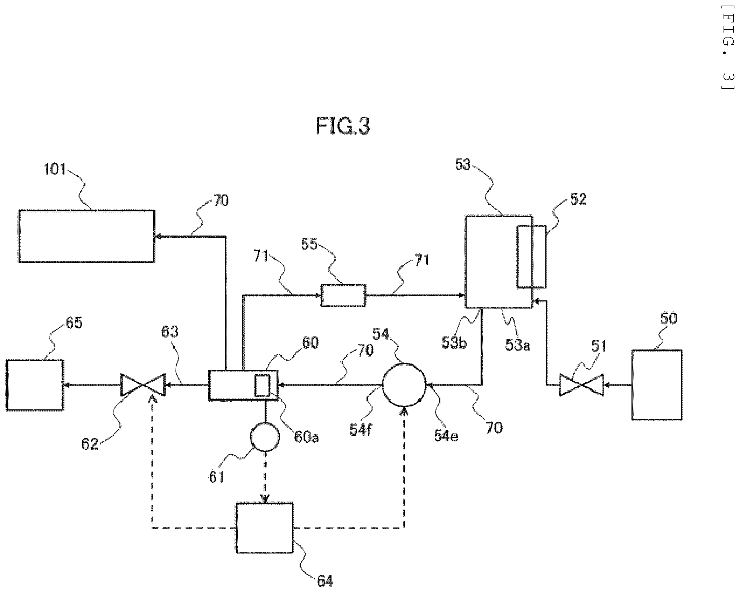

As described above, by detecting abnormality of the water supply pump 54, an automatic analyzer where the reliability of the analysis performance is higher can be provided to the market. Therefore, the characteristic flow path configuration according to the present invention for implementing the abnormality detection of the water supply pump 54 and the automatic air bleeding is the flow path configuration illustrated in Fig. 3. Fig. 3 illustrates the flow path configuration for supplying pure water from the pure water facility 50 to the analysis unit 101.

The flow path for supplying pure water from the pure water facility 50 to the analysis unit 101 is configured by the water supply solenoid valve 51, the water level sensor 52, the water supply tank 53, the water supply pump 54, the fixed throttle 55, a branch pipe 60, a detector 61, a relief valve 62, a waste liquid flow path 63, a supply flow path 70, a return flow path 71, and a control unit 64.

As illustrated in Fig. 3, in the water supply tank 53, a discharge port 53b is provided to supply water to the water supply pump 54 from a bottom surface 53a thereof. The water supply tank 53 is disposed such that a position of the bottom surface 53a in a vertical direction is higher than a position of the center of the aspiration port 54e in the water supply pump 54.

The branch pipe 60 is a portion for branching the supply flow path 70 that is connected to each of mechanisms of the automatic analyzer 100 from the water supply tank 53 to supply pure water to the analysis unit 101, the return flow path 71 that returns water supplied from the water supply pump 54 to the water supply tank 53, and the waste liquid flow path 63 that is branched from the supply flow path 70 to discharge air bubbles in the supply flow path 70 to a waste water tank 65 outside the device. In addition, in the branch pipe 60, a filter 60a for removing foreign matter that is likely to be mixed in the flow path is provided.

As the detector 61, various sensors that detect abnormality in the supply flow path 70 can be used. In the embodiment, an example where a pressure sensor that detects the pressure in the supply flow path 70 is used will be described. The reason for using the pressure sensor as the detector 61 is as follows.

The pressure value in the supply flow path 70 changes depending on the states of various pipes and components configuring the supply flow path 70, the return flow path 71, the waste liquid flow path 63, and the like relating thereto. For example, when the cross-sectional area in the pipe varies due to the reason that, for example, a part of the pipe is bent, the pressure value increases. In addition, when a part of the flow path is released due to leakage or the like of a solenoid valve or the like used for controlling the supply of pure water to a portion where pure water is consumed in the analysis unit 101, the pressure in the pipe decreases. Accordingly, due to the variation in the pressure value in the supply flow path 70, abnormality in the pipe and in the component of the pipe can be detected.

The relief valve 62 is a valve provided in the waste liquid flow path 63 and is preferably an on-off solenoid valve. The relief valve 62 is disposed to be lower than the position of the bottom surface 53a of the water supply tank 53 in the vertical direction.

The case where the waste liquid flow path 63 is connected to the waste water tank 65 is described. The connection destination is not limited to the waste water tank 65, and the waste liquid flow path 63 can be connected to a drain pipe or the like.

The control unit 64 is disposed in the controller 25 that controls the operation of each of mechanisms in the automatic analyzer 100, and performs a control of opening the relief valve 62 while driving the water supply pump 54, based on the abnormality of the supply flow path 70 detected by the detector 61.

In particular, in the embodiment, the control unit 64 controls the detector 61 to monitor a flow path state in the supply flow path 70 during an analysis preparation operation and, when abnormality is detected, performs a control of automatically opening the relief valve 62. Here, "analysis preparation operation" refers to an operation such as the cleaning of the reaction container 2 that is performed after giving an analysis start instruction of the specimen transported and put into the device, and is an operation different from a warm-up operation that is performed after turning on the power of the device.

In addition, when abnormality in the supply flow path 70 is detected, the control unit 64 according to the embodiment performs a control of stopping the water supply pump 54 once and driving the water supply pump 54 again after opening the relief valve 62.

Further, the control unit 64 performs pressure adjustment by monitoring the pressure value in the supply flow path 70 detected by the pressure sensor and preferably making the rotation speed of the water supply pump 54 variable based on a variation in the pressure value.

At this time, when the pressure does not return to a set range after air bleeding, the control unit 64 can perform the automatic adjustment of the pressure value. In addition, the control unit 64 can detect abnormality in the water supply pump 54, the pressure sensor, and the relief valve 62 based on the automatically adjusted pressure value and a control value for driving the water supply pump 54. When the pressure value does not return to the set range after performing the automatic adjustment of the pressure value, the control unit 64 can perform at least one of a control of causing the display unit 25a to display an alarm or a control of stopping the operation of the automatic analyzer 100.

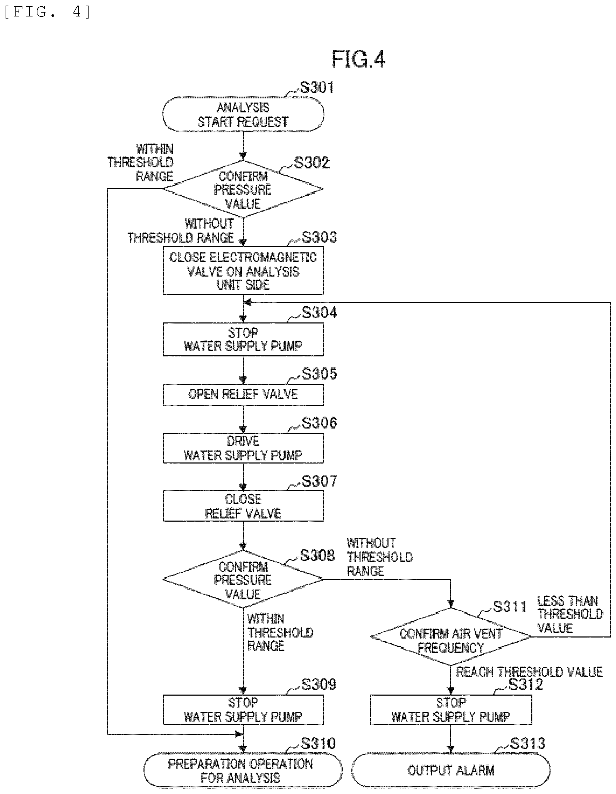

Next, the ON/OFF control of the water supply pump 54 and the control of opening and closing the relief valve 62 will be described in more detail using Fig. 4. Fig. 4 is a flowchart illustrating automatic air bleeding.

First, when an analysis start request of the specimen in the automatic analyzer 100 that is given by an operator operating an input apparatus or the like is recognized (Step S301), the control unit 64 checks the pressure value in the supply flow path 70 using the detector 61 to determine whether or not the pressure value is outside a threshold range (Step S302).

When the control unit 64 determines that the pressure value checked in Step S302 is in the threshold range, the process proceeds to Step S310, and the control unit 64 continues the analysis preparation operation (Step S310) and starts the analysis operation as it is. On the other hand, when the control unit 64 determines that the pressure value is outside the threshold range, the process proceeds to Step S303.

Next, the control unit 64 closes all of solenoid valves 3a, 18a, 19a, 30a, 31a, 32a, 33a, 40a, and 42a on the analysis unit 101 side (Step S303), and temporarily stops the analysis preparation operation. As a result, incorporation of air bubbles into the flow path of the analysis unit 101 is prevented, and a decrease in the analysis performance is prevented.

Next, the control unit 64 stops the water supply pump 54 (Step S304). Through the process of stopping the water supply pump 54, the pressure distribution in the water supply pump 54 is constant, and air bubbles in the water supply pump 54 move to an upper portion 200b of the water supply pump 54.

Next, the control unit 64 opens the relief valve 62 (Step S305). By opening the relief valve 62, the waste liquid flow path 63 is opened to the atmosphere, and due to a difference in height between the water supply tank 53 and the water supply pump 54 in the vertical direction, air bubbles in the water supply pump 54 can be discharged to the downstream of the water supply pump 54 due to the weight of pure water within a short period of time.

Next, the control unit 64 causes the water supply pump 54 to re-operate (Step S306) . As a result, irrespective of a difference in height in the supply flow path 70 or the waste liquid flow path 63 downstream of the water supply pump 54, air bubbles in the supply flow path 70 or the waste liquid flow path 63 can be discharged to the outside of the device.

Next, the control unit 64 closes the relief valve 62 after a predetermined period of time after the reoperation of the water supply pump 54 (Step S307), and subsequently checks the pressure value in the supply flow path 70 again using the detector 61 (Step S308) .

When the control unit 64 determines that the pressure value checked in Step S308 is in the threshold range, the process proceeds to Step S309. After stopping the water supply pump 54 (Step S309), the control unit 64 continues the analysis preparation operation (Step S310), and starts the analysis operation as it is.

On the other hand, when the control unit 64 determines that the pressure value is outside the threshold range, the process proceeds to Step S311. The control unit 64 checks the number of times air bleeding is performed, and checks whether or not the number of times the air bleeding process is performed in Step S304 to Step S307 is a threshold or more (Step S311) .

When the control unit 64 determines that the number of times the air bleeding process is performed is less than the threshold in Step S311, the process returns to Step S304, and air bleeding is performed again. On the other hand, when the control unit 64 determines that the number of times the air bleeding process is performed is the threshold or more, the control unit 64 stops the water supply pump 54 (Step S312), and the process proceeds to Step S313. The control unit 64 causes the display unit 25a to display an alarm (Step S313), and stops the automatic analyzer 100.

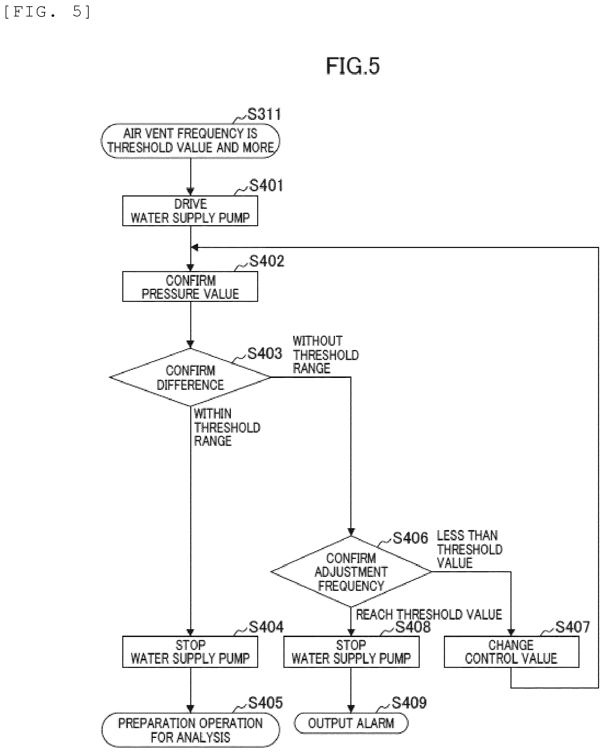

Here, as illustrated in Fig. 4, when the control unit 64 determines that the number of times the air bleeding process is performed is the threshold or more in Step S311, the process proceeds to Step S312. The present invention is not limited to the configuration in which the alarm is output to stop the device, and by performing the automatic adjustment of the pressure value, a malfunction position can also be discriminated. Hereinafter, the process will be described using Fig. 5. Fig. 5 is a flowchart illustrating the automatic adjustment of the pressure.

As illustrated in Fig. 5, when the control unit 64 determines that the number of times the air bleeding process is performed is the threshold or more in Step S311, the control unit 64 causes the water supply pump 54 to operate (Step S401). At this time, in order not to apply a load to the water supply pump 54 and the flow path more than necessary, the water supply pump 54 operates at a low rotation speed.

Next, the control unit 64 checks the pressure value using the detector 61 (pressure sensor) (Step S402), and determines whether or not a difference between a target value of the pressure and the measured pressure value is in a threshold range (Step S403).

When the control unit 64 determines that the difference is in the threshold range, the process proceeds to Step S404 to complete the automatic adjustment of the pressure value. After stopping the water supply pump 54 (Step S404), the control unit 64 continues the analysis preparation operation (Step S405), and starts the analysis operation as it is.

On the other hand, when the control unit 64 determines that the difference is outside the threshold range, the process proceeds to Step S406, and the control unit 64 checks whether or not the number of times the adjustment process of the pressure value is performed is a threshold or more (Step S406).

When the control unit 64 determines that the number of times the adjustment process is performed is less than the threshold, the process proceeds to Step S407. The control unit 64 increases a control value of a given value with respect to a control value for the water supply pump 54, and increases the rotation speed of the water supply pump 54 (Step S407). Next, the process returns to Step S402, the automatic adjustment process of the pressure of Steps S402, S403, and S407 is repeated such that the pressure is in the target range.

On the other hand, when the control unit 64 determines that the number of times the automatic adjustment process of the pressure is repeated in Step S406 reaches the threshold, the control unit 64 stops the water supply pump 54 (Step S408) and causes the display unit 25a to display an alarm (Step S409). In this case, the control unit 64 can determine that malfunction occurs at one or more positions among the water supply pump 54, the solenoid valves 3a, 18a, 19a, 30a, 31a, 32a, 33a, 40a, and 42a, and the relief valve 62 .

Here, by checking a difference between the control value of the water supply pump 54 after completion of the automatic adjustment of the pressure value and the control value of the water supply pump 54 before performing the automatic adjustment of the pressure value, whether or not deterioration of the water supply pump 54 and leakage of the relief valve 62 occur can be detected.

Further, the automatic air bleeding process and the automatic adjustment process illustrated in Figs. 4 and 5 do not need to be performed during the analysis preparation operation after the analysis start instruction of the automatic analyzer 100, and may be performed based on an instruction of a maintenance worker or an operator.

In addition, the above-described control of the pressure is not limited to the configuration in which the rotation speed of the water supply pump 54 is controlled, and by replacing the fixed throttle 55 provided in the return flow path 71 with a variable throttle where the degree of opening and closing is variable and controlling the degree of opening and closing in the variable throttle (by narrowing the throttle, the pressure increases; by widening the throttle, the pressure decreases), the flow rate of pure water returning to the water supply tank 53 can be controlled to change.

Next, the effect of the embodiment will be described.

The automatic analyzer 100 according to the embodiment includes a water supply tank 53, a supply flow path 70 connected to each of mechanisms of an automatic analyzer 100 from the water supply tank 53, a water supply pump 54 configured to supply water to each of mechanisms from the water supply tank 53 through the supply flow path 70, a detector 61 configured to detect abnormality in the supply flow path 70, a waste liquid flow path 63 branched from the supply flow path 70 in a branch pipe 60 provided in the supply flow path 70, a relief valve 62 provided in the waste liquid flow path 63, and a control unit 64 configured to control an operation of each of the mechanisms in the automatic analyzer 100, in which the control unit 64 opens the relief valve 62 while driving the water supply pump 54, based on the abnormality of the supply flow path 70 detected by the detector 61.

As a result, air bleeding can be automatically performed. Therefore, the driving of the water supply pump 54 in a cavitation state where air bubbles are incorporated into the water supply pump 54 can be avoided, and the risk of malfunction in the water supply pump 54 can be reduced. Accordingly, a decrease in the performance of the water supply pump 54 caused by cavitation can be prevented, and the reliability of the analysis performance can be further improved. In addition, the automatic analyzer 100 in which, when the device is installed or when cavitation of the water supply pump 54 occurs, maintenance work of a maintenance worker or an operator can be reduced can be obtained.

In addition, the detector 61 is a pressure sensor configured to detect a pressure in the supply flow path 70. Therefore, not only air bleeding but also the determination of whether or not abnormality occurs in the relief valve 62 and the like can be performed.

Further, the relief valve 62 is an on-off solenoid valve. As a result, the opening and closing control can be smoothly performed.

In addition, the control unit 64 causes the detector 61 to monitor a flow path state in the supply flow path 70 during an analysis preparation operation and, when abnormality is detected, automatically opens the relief valve 62. As a result, whether or not air is incorporated can be checked immediately before the start of analysis, and thus the risk of influence on the analysis performance can be minimized.

Further, when abnormality in the supply flow path 70 is detected, the control unit 64 stops the water supply pump 54 once and drives the water supply pump 54 again after opening the relief valve 62. As a result, the continuous operation in a state where it is determined that air is incorporated can be avoided, and the occurrence of large abnormality can be suppressed.

In addition, the relief valve 62 is disposed to be lower than a position of a bottom surface 53a of the water supply tank 53 in a vertical direction. As a result, water or air in the waste liquid flow path 63 can be prevented from flowing to the branch pipe 60 side, and the air bleeding efficiency can be improved.

Further, the water supply tank 53 is disposed such that the position of the bottom surface 53a of the water supply tank 53 in the vertical direction is higher than a position of the center of the aspiration port 54e in the water supply pump 54. As a result, the configuration in which air bleeding can be more easily performed can be obtained.

In addition, water is supplied to the water supply pump 54 from the bottom surface 53a of the water supply tank 53. As a result, water can be smoothly supplied due to the weight of the water, and thus incorporation of air from the water supply tank 53 can be suppressed.

Further, the control unit 64 monitors a pressure value in the supply flow path 70 detected by the pressure sensor and performs automatic adjustment of the pressure value based on a variation in the pressure value. As a result, time and effort required for the pressure adjustment by an operator can be saved.

In addition, the control unit 64 performs the pressure adjustment by making a rotation speed of the water supply pump 54 variable. As a result, the automatic adjustment of the pressure can be easily performed.

Further, when the pressure does not return to a set range after air bleeding, the control unit 64 performs the automatic adjustment of the pressure value. As a result, an operator does not need to perform the pressure adjustment, and a burden can be further reduced.

In addition, the automatic analyzer 100 further includes a display unit 25a that performs various kinds of display to an operator, in which when the pressure value does not return to the set range after performing the automatic adjustment of the pressure value, the control unit 64 can perform at least one of a control of causing the display unit 25a to display an alarm or a control of stopping the operation of the automatic analyzer 100. As a result, a countermeasure can be rapidly acquired from the operator, and the progress of abnormality can be suppressed more reliably.

Further, the control unit 64 detects abnormality in the water supply pump 54, the pressure sensor, and the relief valve 62 based on the automatically adjusted pressure value and a control value for driving the water supply pump 54. As a result, an abnormal position of the device can be easily specified, and a burden on the operator can be further reduced.

### <Others>

The present invention is not limited to the above-described embodiment, and various modifications and applications can be made. The embodiment has been described in detail in order to easily describe the present invention, and the present invention is not necessarily to include all the configurations described above.

For example, in the above-described embodiment, the case where the pressure sensor is disposed as the detector 61 is described. However, the detector 61 is not limited to the pressure sensor. For example, a flow sensor can also be used as the detector 61. In this case, the flow sensor is disposed in a path between the water supply pump 54 and the branch pipe 60 or in a return flow path between the branch pipe 60 and the water supply tank 53. Abnormality in the flow path can be detected based on a change in the flow rate measured by the flow sensor.

Even in this case, the point that the measurement is performed in Steps S302 and S308 of Fig. 4 is the same as described above. In addition, automatic adjustment of a flow rate can be performed using the flow sensor instead of the automatic adjustment of the pressure value. Even in this case, the above-described discrimination of a malfunction portion can be performed.

In addition, abnormality of the water supply pump 54 can also be detected by disposing an acoustic sensor such as a microphone in the vicinity of the water supply pump 54 instead of the flow path and monitoring noise when the water supply pump 54 operates.

### Reference Signs List

1: reaction disk
2: reaction container
3: cleaning mechanism
3a, 18a, 19a, 30a, 31a, 32a, 33a, 40a, 42a: electromagnetic valve
4: spectrophotometer
4a: light source
5, 6: stirring mechanism
7, 8: reagent dispensing mechanism
9: reagent disk
10: reagent bottle
11, 12: sample dispensing mechanism
11a, 12a: sample probe
13, 14, 30, 31, 32, 33: cleaning tub
15: sample container
16: sample rack
17: sample conveying mechanism
18: syringe for sample
19: syringe for reagent
25: controller
25a: display unit
40: circulation pump
41: gear pump
42: circulation pump
50: pure water feeding apparatus
51: water supply electromagnetic valve
52: water level sensor
53: water supply tank
53a: bottom surface
53b: discharge port
54: water supply pump
54a: pump case
54b: impeller
54c: motor
54d: shaft
54e: suction port
54f: discharge port
54g: rotation shaft
55: fixed restriction
60: branch pipe
60a: filter
61: detector
62: relief valve
63: waste liquid path
64: control unit
65: waste water tank
70: supply path
71: return path
100: automatic analyzer
101: analysis unit
102: water supply unit
200a: air bubble
200b: upper portion

## Claims

1. An automatic analyzer comprising:
a water supply tank;
a supply path connected to each mechanism of the automatic analyzer from the water supply tank;
a pump which supplies water to the each mechanism from the water supply tank through the supply path;
a detector which detects abnormality in the supply path;
a waste liquid path branched from the supply path in a branched portion provided in the supply path;
a relief valve provided in the waste liquid path; and
a control unit which controls operation of the each mechanism in the automatic analyzer, in which
the control unit opens the relief valve while driving the pump, based on the abnormality in the supply path detected by the detector.

2. The device according to claim 1, in which
the detector is a pressure sensor which detects pressure in the supply path.

3. The device according to claim 1, in which
the detector is a flow rate sensor which detects a flow rate in the supply path.

4. The device according to claim 1, in which
the relief valve is an electromagnetic on-off valve.

5. The device according to claim 4, in which
at a time of preparing operation for analysis, the control unit automatically opens the relief valve when the detector monitors a state of a flow in the supply path and detects abnormality.

6. The device according to claim 5, in which
the control unit once stops the pump when detecting the abnormality in the supply path and drives the pump again after opening the relief valve.

7. The device according to claim 1, in which
the relief valve is arranged at a position lower than a bottom surface of the water supply tank in a vertical direction.

8. The device according to claim 1, in which
a bottom surface of the water supply tank is arranged at a position higher than a center position of a suction port of the pump, in a vertical direction.

9. The device according to claim 8, in which
water is supplied to the pump from the bottom surface of the water supply tank.

10. The device according to claim 2, in which
the control unit monitors a pressure value in the supply path detected by the pressure sensor and automatically adjusts the pressure value based on a fluctuation of the pressure value.

11. The device according to claim 10, in which
the control unit adjusts a pressure by making a rotation number of the pump variable.

12. The device according to claim 11, in which
the control unit automatically adjusts the pressure value when the pressure is not returned to a set range after air vent.

13. The device according to claim 12, further comprising
a display unit which performs various display for an operator of the automatic analyzer, in which
the control unit eighter controls the display unit to display alarm when the pressure value is not returned to the set range after performing the automatic adjustment of the pressure value, or stops the operation of the automatic analyzer.

14. The device according to claim 11, in which
the control unit detects abnormality of the pump, the pressure sensor, and the relief valve, according to the pressure value after the automatic adjustment and a control value for driving the pump.
